# EUROPEAN PATENT APPLICATION

(11) **EP 2 293 186 A1**
(43) Date of publication of application: **09.03.2011**
(21) Application number: 09169261.6
(22) Date of filing: 02.09.2009
(51) Int. Cl.: G06F 9/44

(54) **Method and system for creating a tree structure**

(71) Applicant: SIEMENS AKTIENGESELLSCHAFT, 80333 München (DE)
(72) Inventor: Rathi, Ashwani, 122001, Gurgaon (IN)

(57) **Abstract**

The present invention provides a method and system for creating a tree structure. In the proposed method, an input string (60, 100) is received that comprises a plurality of tree object names (61A-C, 101A-C) interspaced by one or more separator characters (62, 102A-D). The input string (60, 100) is then parsed using said one or more separator characters (62, 102A-D) to extract individual tree object names (61A-C, 101A-C) from said input string (60, 100). A tree structure (65, 110) is created that comprises a hierarchy of tree objects (66A-C, 111A-C) having said extracted tree object names (61A-C, 101A-C), wherein the hierarchy of said tree objects (66A-C, 111A-C) is dependent on an order of said tree object names (61A-C, 101A-C) in the input string (60, 100).

## Description

The present invention relates to a system and method for creating a tree structure in a computer application.

Currently, in computer applications rendering a tree-view of data objects, for example, including file folders, a user is able to create a single new object at a time, which gets reflected in the tree hierarchy once the new object is created. Taking an example of a situation where the user wants to create an object B within a parent object A, an object C within the object B, an object D within the object C, and so on, the conventional approach is to create all the objects in the sub-tree structure one by one in a successive way inside the parent object A. Thus, in this example, the user first has to create object B inside the parent object A. In a next operation the user has to create the object C inside the object B, subsequently creating the object D inside the object C and so on.

Disadvantageously, such a process is repetitive and time consuming and may be often subject to errors.

The object of the present invention is to provide a method and system that provide a simplified and quicker process for the user to define a tree structure.

The above object is achieved by the method according to claim 1 and the system according to claim 8.

The underlying idea of the present invention is the use of separator characters in the input string containing the tree object names, based on which the input string is parsed to extract individual object names and create a tree hierarchy. The advantage of the present invention is that the user is now able to create an entire tree hierarchy in a single operation, thus avoiding the disadvantages of the repetitive processes of creating the tree objects as mentioned above.

In one embodiment of the present invention, said tree object names in the input string are interspaced by a single separator character, wherein creating said tree structure comprises creating said tree objects in hierarchical order corresponding to the order of said tree object names in the input string. The above embodiment relates to an application where the user intends to create a vertically linked hierarchy of tree objects, i.e., a hierarchy of tree objects wherein every parent tree object has a single child tree object. The above technique involves a simplified processing, wherein the tree structure is created in a single step by using the order of tree object names in the input string, such that the level of a tree object in the created hierarchy corresponds to a position of the name of the tree object in the input string.

In an alternate embodiment of the present invention, said tree object names in the input string are interspaced by multiple separator characters that individually, or in combination, define a parent-child link or a sibling link between said tree objects, wherein said method further comprises determining a hierarchical relationship between the tree objects using said separator characters and the order of said tree object names in the input string, and wherein creating said tree structure comprises creating said tree objects having said determined hierarchical relationship. This embodiment allows the user to create complex hierarchical trees having vertically as well as horizontally linked tree objects, in a single step, by formulating the hierarchical relationship between the tree objects in a string. The present invention extracts the user-defined hierarchy from the parsed input string and creates the tree structure using the extracted hierarchical relationship.

In one aspect of the present invention, the proposed method can be used for creating a sub-tree structure within a user-selected parent tree object, wherein the proposed method comprises:
- rendering a first tree-view,
- receiving a user input selecting a parent tree object from the rendered first tree-view,
- creating said hierarchy of tree objects having said tree object names within said parent tree object, based the received input string and the parsing of said received input string, and
- rendering a second tree-view including said created hierarchy of said tree objects within said parent tree object.

In one embodiment, the proposed method further includes receiving a user input defining said one or more separator characters. This gives the user the option of declaring the character(s) that the user would want as the separating character(s). This allows the user to use any characters, including special characters, in naming the tree objects, excluding just the character(s) which is/are declared by the user as separator character(s).

In an exemplary further embodiment, to enable the user to define the separator character(s) along with the input string, the proposed method comprises rendering a dialog box following said receiving of said user input selecting said parent tree object, said dialog box having a first user input field configured for receiving said input string and one or more second user input fields configured for receiving said one or more separator characters.

In an exemplary alternate embodiment, to obviate the use of a dialog box, said one or more separator characters are predefined characters, said method further comprising rendering a user-editable tree node following said receiving of said user input selecting said parent tree object, said user-editable tree node being configured to receive said input string.

The present invention is further described hereinafter with reference to illustrated embodiments shown in the accompanying drawings, in which:
FIG 1 is a computer system wherein the present invention may be incorporated,
FIG 2 is a flowchart illustrating a computer implemented method for creating a tree structure according to one embodiment of the present invention,
FIG 3A is an exemplary representation of a tree-view rendered by an application,
FIG 3B is a representation of the tree view having a context menu provided therein for creating a sub-tree structure within a selected parent tree object,
FIG 3C is an exemplary representation of the tree view having a dialog box provided therein for receiving the input string and a separator character, according a first embodiment of the present invention,
FIG 3D is a representation of the tree-view of the first embodiment, after creating the sub-tree structure within the selected parent object,
FIG 4A shows an exemplary hierarchy string comprising multiple separator characters defining a hierarchical relationship between tree objects, and
FIG 4B is an exemplary representation of a tree-view rendered based on the input string of FIG 4A.

The present invention is based on the idea of capturing an entire tree hierarchy in a single string input by the user. The proposed technique would include logic for parsing this string to fetch the tree object names and their relationships with respect to each other, and for subsequently creating a tree structure including a hierarchy of tree objects based on the parsed input string.

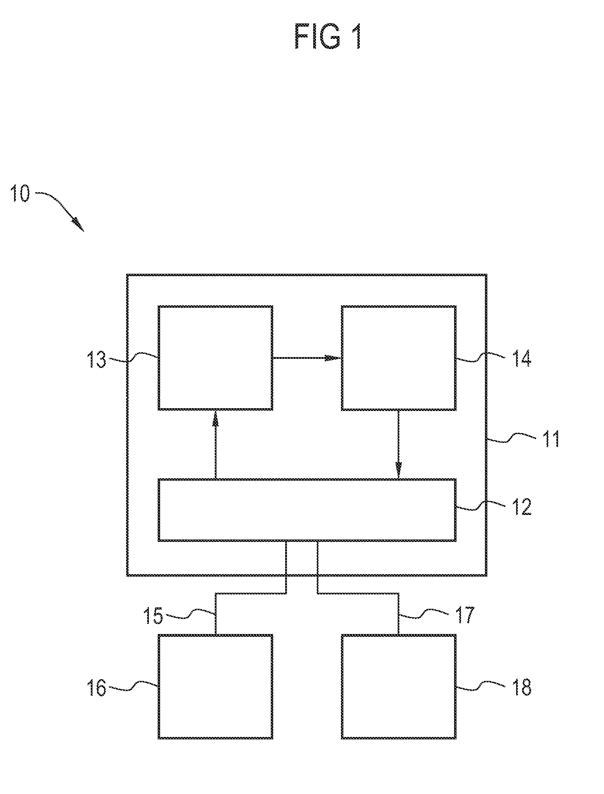

FIG 1 represents a computer system 10 for practicing aspects of the present invention. The system 10 includes a processor 11 for executing machine-readable instructions stored on a computer readable medium, for performing tasks. These machine-readable instructions include a software application wherein aspects of the present invention are incorporated. The processor 11 may also comprise memory for storing machine readable instructions executable for performing tasks. Functionally, the processor 11 includes a user interface (UI) module 12, a parsing module 13 and a tree creation module 14. Each of these modules, as used herein, is understood to include any one or a combination of hardware and software suitable for executing respective machine-readable instructions that define the tasks performed by these modules. The UI module 12 receives input signals 15 from one or more user input devices 16, such as a keyboard, mouse, light pen, touch screen or any other means allowing a user to provide data to a processor 11. Modules of the processor 11 manipulate and transform the data signals, in response to which, the UI module 12 provides output signals 17 to one or more output devices 18, comprising for example, display monitors.

In the context of one aspect of the present invention, the UI module 12 is adapted to render a tree-view of data objects generated by application software. The tree-view is displayed by the display device 18. In order to enable creation of a new tree structure within the existing tree-view by the user, the UI module 12 receives an input string from the user via the input device(s). The input string comprises multiple tree object names interspaced by one or more separator characters. The parsing module 13 breaks down the input string into tree object names using the separator character(s) to extract individual tree object names. Subsequently, the tree creation module 14 creates a tree structure comprising a hierarchy of tree objects having the extracted tree object names. The hierarchy of tree objects in the created tree structure is dependent on an order of tree object names in the input string. The user interface module 12 then renders the newly created tree-view via the display device 18.

Unless specifically stated otherwise, discussions utilizing terms such as "receiving" or "rendering" or "parsing" or "determining" or "displaying" refer to the action and processes of the computer system 10, or similar electronic computing device or service, that manipulates and transforms data represented as physical (electronic) quantities within the computer system's registers and memories into other data similarly represented as physical quantities within the computer system memories or registers or other such information storage, transmission or display devices.

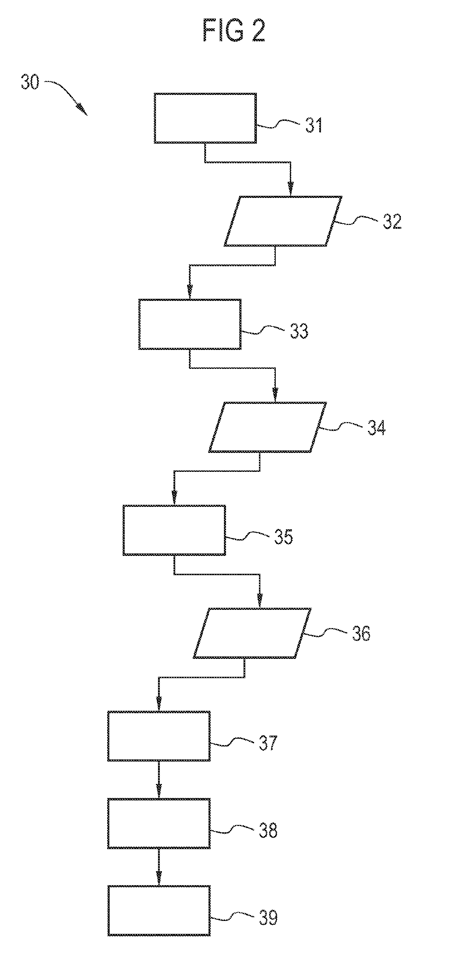

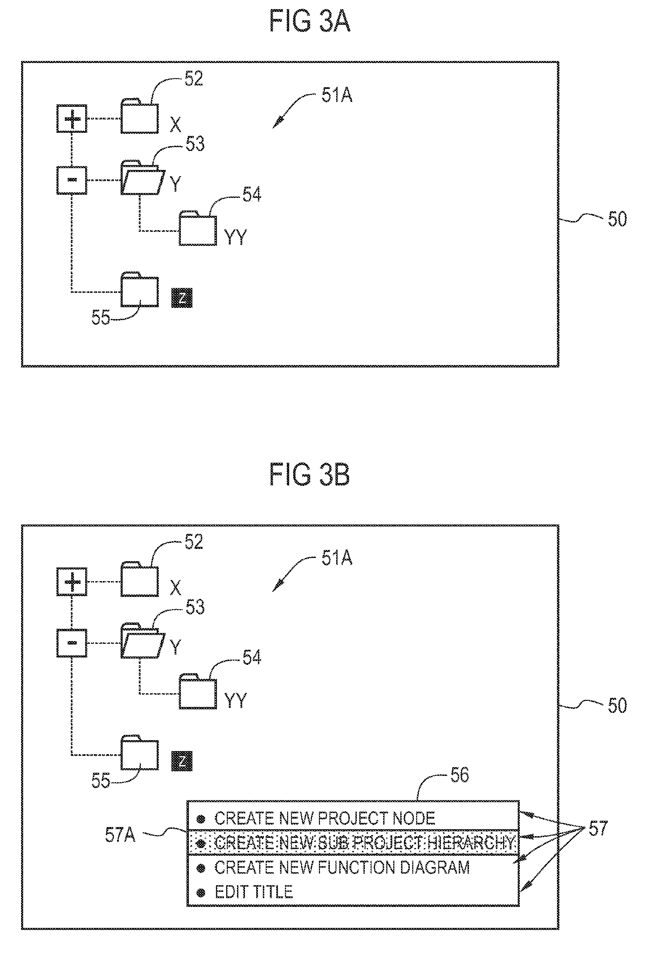

Embodiments of the present invention are now illustrated referring to an exemplary method 30, depicted in FIG 2, which may, for example, be implemented by a computer system as described above. The illustrated method 30 enables a user to create a hierarchy of tree objects as a sub-tree structure within a parent tree object selected by a user, in a single operation. The illustrated method 30 begins at block 31, wherein a tree-view of data objects, such as file folders, is rendered by a software application. Such a tree-view is exemplified in FIG 3A which shows a window 50 containing an expandable tree-view 51A of data objects 52, 53, 54 and 55, also referred to herein as tree objects. The window 50 may be generated by a software application, for example, a plant automation software application, wherein the tree objects 52, 53, 54 and 55 may comprise project nodes. Referring back to FIG 2, at block 32, a user input is received, for example, via a mouse-click, for selecting a particular node or tree object, wherein the user intends to create a sub-tree structure. Block 33 of the illustrated embodiment involves rendering of a context menu following the above-mentioned user input. FIG 3B shows an exemplary context menu 56 that is rendered, for example in response to a right-mouse-click by the user on a selected tree-object or project node 55. The context menu 56 contains a list of options 57 of actions to be performed involving selected tree object 55. In accordance with the illustrated embodiment, a new option 57A is provided in the context menu 56 for creating a new tree structure, such as a new sub-project hierarchy in this example, within the selected tree object 55. The tree object 55 would thus be the parent object within which this new tree structure would be created as described below.

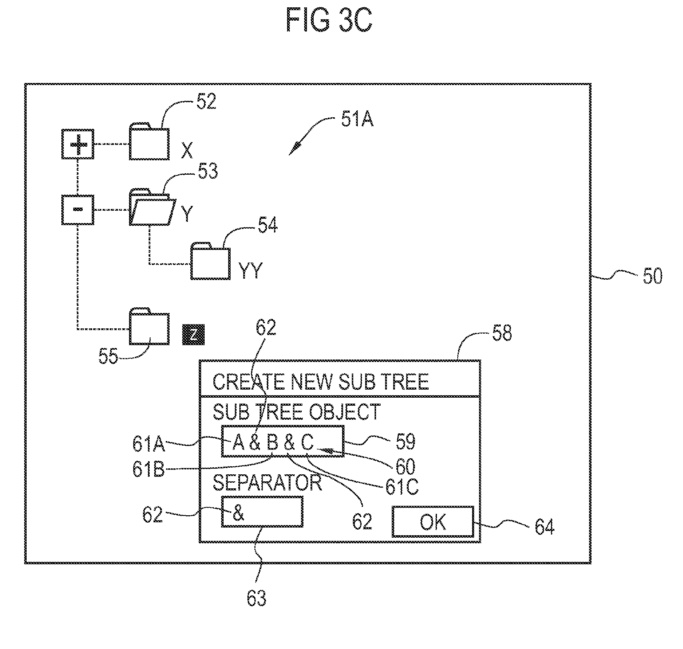

Referring back to FIG 2, at block 34, a user input is received for selecting the option for creating a sub-tree structure within the selected parent tree object. In accordance with the present invention, a mechanism is provided for receiving an input string, also referred to as hierarchy string, formulated by the user, based upon which the sub-tree hierarchy is created within the parent tree object. The input string would comprise the names of the tree objects of the new tree structure to be created, interspaced by one or more separator characters. The separator characters may be pre-defined characters or may comprise user defined characters. In the exemplified embodiment, once the user selects the option of creating a new tree structure inside the selected parent tree object, a configuration dialog box is rendered at block 35 for receiving the user input string. An exemplary configuration dialog box 58 is shown in FIG 3C. Herein the rendered dialog box 58 contains a first user input field 59 for receiving the input string 60, including object names 61A, 61B and 61C, separated by a user defined separator character 62. A second user input field 63 is provided in the dialog box 58, for receiving the separator character 62 declared by the user. It should be noted that the object names 61A, 61B and 61C may each comprise one or more characters. Further, although in this example, a single separator character 62 is used, multiple separator characters may, in principle, be used. Once the user enters the appropriate inputs in the fields 59 and 63 and clicks on a confirmation button 64, the new tree structure is created into the parent object 55 as an atomic operation, i.e., without any further input from the user as described hereinafter.

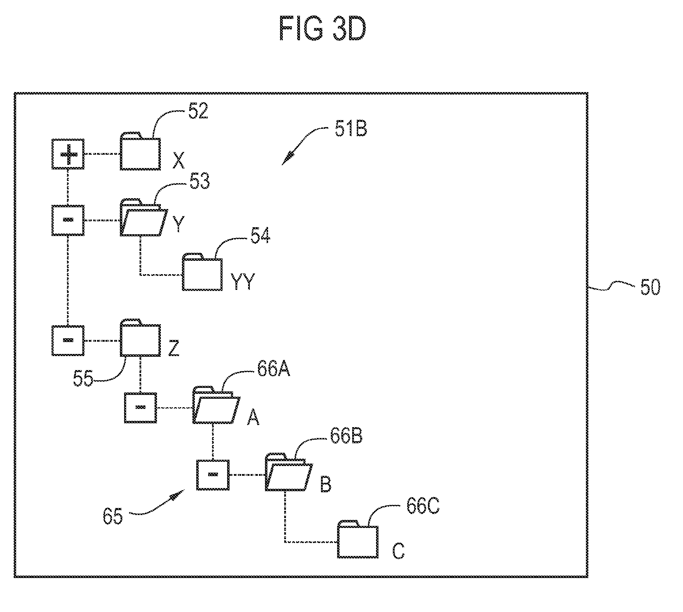

Referring back to FIG 2, block 36 of the illustrated method involves receiving of the above-mentioned user input into the rendered dialog box, the user input including the hierarchy string and the separator character. Next at block 37, individual tree object names are extracted from the input string. This is done by parsing the input string to break it down into the tree object names, using the separator character interspacing these names. Subsequently, a hierarchical tree structure is created at block 38 which involves creating new tree objects within the selected parent object, the new tree objects having names that were extracted at block 37. The hierarchy of the newly created tree objects is determined depending on the order of the object names in the input string. Block 39 involves rendering of a new tree-view 51B having the newly created sub-tree structure within the parent object. FIG 3D shows the new tree-view including a newly created sub-tree structure 65, created within the selected parent object 55. As shown, the new tree objects 66A, 66B, and 66C have names corresponding respectively to the object names 61A, 61B and 61C in the input string. In this example, a single separator character 62 has been used for interspacing the object names in the input strings. However, multiple separator characters or a string of separator characters may also be used for interspacing the object names in the input string. In such a case, the parsing of the input string (block 37 in FIG 2) is performed using this separator string to extract the tree object names. Also, in the example illustrated above, the single separator character implicitly defines a parent-child relationship between tree objects having consecutively occurring object names in the input string. Herein, advantageously, the step of creating the tree structure (block 38 in FIG 2) involves simplified processing wherein the tree objects are created in a hierarchical order corresponding to the order of the tree object names in the input string. The tree-structure created resultantly is a vertically linked tree structure, i.e., a tree structure wherein no two tree objects have a common parent tree object.

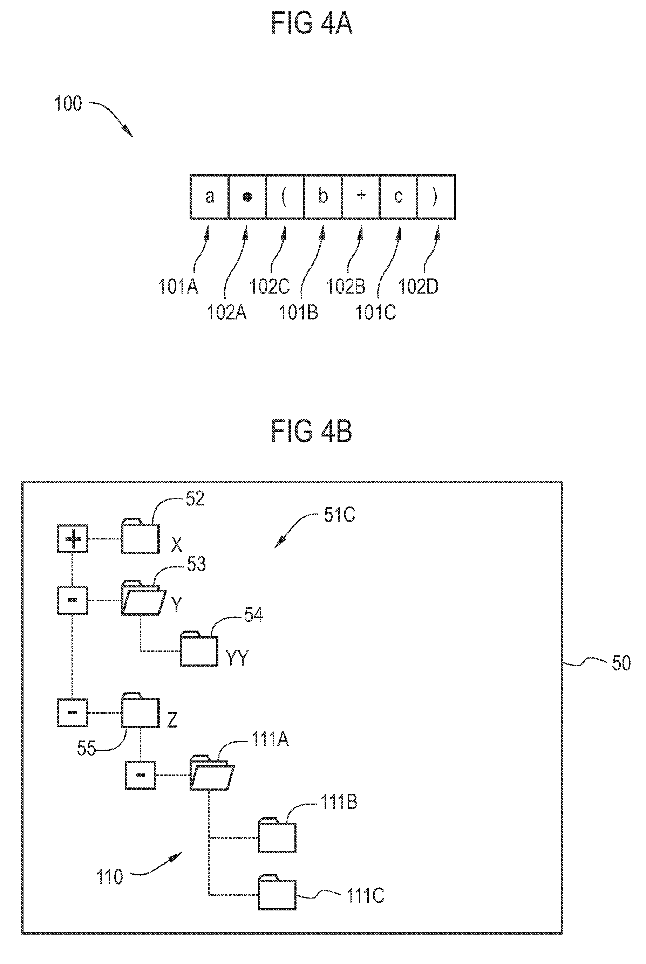

In an alternate embodiment, instead of using a single separator character defining a parent-child relationship between tree objects, multiple separator characters may be used in the input string to define vertical and horizontal linking of tree objects. Horizontally linked tree objects are tree objects that have a common parent tree object, i.e., having a sibling relationship. Hence in this embodiment, it is possible for the user to define a complete tree hierarchy having any number of vertically and horizontally linked tree objects, in a single string. An example of such a string is shown in FIG 4A. Herein the string 100 comprises seven characters, out of which the characters 101A, 101B and 101C refer represent tree object names, while the characters 102A, 102B, 102C and 102D are separator characters. As mentioned above, the tree object names 101A, 101B and 101C may also contain several characters. In this example, the separator character 102A defines a parent-child link between tree objects, while the separator character 102B defines a sibling link between tree objects. Additionally, the separator characters 102C and 102D define an associative grouping of tree objects. In this example the tree objects corresponding to the names 101B and 101C have a sibling relationship and are further associatively grouped by the separator characters 102C and 102D such that they collectively have a child relationship with respect to a parent tree object corresponding to the name 101A.

In this afore-described embodiment, the multiple separator characters may be user defined, for example by rendering a configuration dialog box providing a first input field configured for receiving the input string and one or more input fields for receiving the multiple separator characters. The received input string is then parsed using these multiple separator characters to extract the tree object names. The hierarchical relationship between the tree objects is then determined using the separator characters and the order of the tree object names in the input string. The sub-tree structure is then created by creating new tree objects having the extracted object names and the having using the determined hierarchical relationship. The sub-tree structure is then rendered as a new tree-view 51C as shown in FIG 4B. Herein the sub-tree structure 110 includes newly created tree objects 111A, 111B and 111C within the parent object 55, having names corresponding to the names 101A, 101B and 101C in the input string in FIG 4A. As shown, the created tree objects 111A, 111B and 111C have a hierarchical relationship as determined from the input string illustrated in FIG 4A.

In the above-described embodiments the separator character(s) were user-defined, allowing greater flexibility to the user in using special characters in naming the tree objects. However, in an alternate embodiment, the separator character(s) may be predefined into the system architecture. In this case, instead of a configuration dialog box, a user-editable tree node may be rendered for receiving the input string, after the user has selected an option of creating a sub-tree structure inside the selected parent tree object. The user may terminate the input string, for example, by pressing on an enter key in the keyboard, or by mouse-clicking outside the editable tree node. Subsequently, as described above, the input string is parsed to extract the individual tree object names using the predefined separator character and the sub-tree structure is created using the extracted tree object names and the order of these names in the input strings.

Summarizing, the present invention provides a method and system for creating a tree structure. In the proposed method, an input string is received that comprises a plurality of tree object names interspaced by one or more separator characters. The input string is then parsed using said one or more separator characters to extract individual tree object names. A tree structure is created that comprises a hierarchy of tree objects having said tree object names, wherein the hierarchy of said tree objects is dependent on an order of said tree object names in the input string.

Although the invention has been described with reference to specific embodiments, this description is not meant to be construed in a limiting sense. For example, the embodiments described above enable a user to create a hierarchy of tree objects as a sub-tree structure within a parent tree object selected by a user, in a single operation. However the illustrated embodiments are merely exemplary and various other scenarios may be contemplated by one skilled in the art. Accordingly, various modifications may be made to the aforementioned embodiments, without departing from the scope of the present invention as defined by the below-mentioned patent claims.

## Claims

1. A method for creating a tree structure (65, 110), comprising:
- receiving an input string (60, 100) comprising a plurality of tree object names (61A-C, 101A-C) interspaced by one or more separator characters (62, 102A-D),
- parsing the input string (60, 100) using said one or more separator characters (62, 102A-D) to extract individual tree object names (61A-C, 101A-C) from said input string (60, 100), and
- creating a tree structure (65, 100) comprising a hierarchy of tree objects (66A-C, 111A-C) having said extracted tree object names (61A-C, 101A-C), wherein the hierarchy of said tree objects (66A-C, 111A-C) is dependent on an order of said tree object names (61A-C, 101A-C) in the input string (60, 100).

2. The method according to claim 1, wherein said tree object names (61A-C) in the input string (60) are interspaced by a single separator character (62), wherein creating said tree structure (65) comprises creating said tree objects (66A-C) in a hierarchical order corresponding to the order of said tree object names (61A-C) in the input string (60).

3. The method according to claim 1, wherein said tree object names (101A-C)in the input string (100) are interspaced by multiple separator characters (102A-D) that individually, or in combination, define a parent-child link or a sibling link between said tree objects, wherein said method further comprises determining a hierarchical relationship between the tree objects using said separator characters (102A-D) and the order of said tree object names (101A-C) in the input string (100), and wherein creating said tree structure (110) comprises creating said tree objects (11A-C) having said determined hierarchical relationship.

4. The method according to any of the preceding claims, comprising:
- rendering a first tree-view (51A),
- receiving a user input (32) selecting a parent tree object (55) from the rendered first tree-view (51A),
- creating said hierarchy of tree objects (66A-C, 111A-C) having said tree object names within said parent tree object, based on the received input string (60, 100) and the parsing of said received input string (60, 100), and
- rendering a second tree-view (51B, 51C) including said created hierarchy of said tree objects (66A-C, 111A-C) within said parent tree object (55).

5. The method according to claim 4, further comprising receiving a user input (36) defining said one or more separator characters (62, 102A-D).

6. The method according to claim 5, comprising rendering a dialog box (58) following said receiving of said user input (32) selecting said parent tree object (55), said dialog box (55) having a first user input field (59) configured for receiving said input string (60, 100) and one or more second user input fields (63) configured for receiving said one or more separator characters (62, 102A-D).

7. The method according to any of claims 1 to 4, wherein said one or more separator characters (62, 102A-D) are predefined characters, said method further comprising rendering a user-editable tree node following said receiving of said user input (32) selecting said parent tree object (55), said user-editable tree node being configured to receive said input string (60, 100).

8. A system (10) for creating a tree structure, comprising:
- user interface means (12) receiving an input string (60, 100) comprising a plurality of tree object names (61A-C, 101A-C) interspaced by one or more separator characters (62, 102A-D),
- parsing means (12) for breaking down the input string (60, 100) into said tree object names (61A-C, 101A-C) using said one or more separator characters (62, 102A-D), to extract said tree object names 61A-C, 101A-C), and
- tree creation means (14) for creating a tree structure (65, 100) comprising a hierarchy of tree objects (66A-C, 111A-C) having said extracted tree object names (61A-C, 101A-C), wherein the hierarchy of said tree objects (66A-C, 111A-C) is dependent on an order of said tree object names (61A-C, 101A-C) in the input string (60, 100).

9. The system (10) according to claim 8, wherein said tree creation means (14) is adapted for identifying hierarchical relationships between the tree objects (66A-C, 111A-C) having said tree object names using said separator characters 62, 102A-D).

10. The system (10) according to any of claims 8 and 9, wherein,
- said user interface means (12) is adapted for rendering a first tee-view (51A) and for receiving a user input (32) selecting a parent tree object (55) from the rendered first tree-view (51A),
- said tree creation means (14) is adapted for creating said hierarchy of tree objects (66A-C, 111A-C) having said tree object names (61A-C, 101A-C) within said parent tree object (55), and
- said user interface means (12) is adapted for rendering a second tee-view (51B, 51C) including said created hierarchy of said tree objects (66A-C, 111A-C) within said parent tree object (55).

11. The system (10) according to claim 10, wherein said user interface means is adapted to receive a user input that defines said one or more separator characters.

12. The system (10) according to claim 11, wherein said user interface means (12) is adapted for rendering a dialog box (58) following said receiving of said user input (32) selecting said parent tree object (55), said dialog box (55) having a first user input field (59) configured for receiving said input string (60, 100) and one or more second user input fields (63) configured for receiving said one or more separator characters (62, 102A-D).

13. The system (10) according to any of claims 8 to 12, wherein said one or more separator characters (62, 102A-D) are predefined characters, wherein said user interface means (12) is adapted for rendering a user-editable tree node following said receiving of said user input (32) selecting said parent tree object (55), said user-editable tree node being configured to receive said input string (60, 100).
